# EUROPEAN PATENT SPECIFICATION

(11) **EP 0 782 216 B1**
(45) Date of publication and mention of the grant of the patent: **17.04.2002**
(21) Application number: 96120075.5
(22) Date of filing: 13.12.1996
(51) Int. Cl.: H01R 9/24, H02G 3/08, B60R 16/02, H01R 13/64, H01R 12/16, H01R 12/18, H05K 5/00, H05K 7/02

(54) **An electrical connection box, a connection construction, a bus bar fixing construction and a connection terminal**
Elektrisches Verbindungsgehäuse, Verbindungskonstruktion, Fixiervorrichtung für Sammelschienen und Anschlussklemme
Boîtier de connexion électrique, construction de la connexion, construction pour la fixation d'une barre de distribution et borne de raccordement

(30) Priority: 14.12.1995 JP 32568295; 14.12.1995 JP 32577695; 18.12.1995 JP 32872695; 21.12.1995 JP 33321495; 21.12.1995 JP 33340295; 25.12.1995 JP 33660895
(43) Date of publication of application: 02.07.1997
(73) Proprietor: SUMITOMO WIRING SYSTEMS, LTD., Yokkaichi City Mie 510 (JP)
(72) Inventor: Isshiki, Yoshihiro, Sumitomo Wiring Systems, Ltd., Yokkaichi-City, Mie 510 (JP)
(74) Representative: Müller-Boré & Partner Patentanwälte

(56) References cited:
- EP-A- 0 240 453
- EP-A- 0 259 897
- EP-A- 0 526 861
- GB-A- 2 123 614
- US-A- 4 922 380
- US-A- 4 952 753
- US-A- 4 959 018
- PATENT ABSTRACTS OF JAPAN vol. 018, no. 326 (E-1565), 21 June 1994 & JP 06 077674 A (YAZAKI CORP), 18 March 1994,

## Description

The present invention relates according to an electrical connection box, particularly provided with an electronic circuitry to be connected with an automotive wiring harness and is particularly designed to reduce a production cost and to securely connect busbars accommodated in the electrical connection box with the electronic circuit board via connection terminals. The present invention relates according to a second aspect to a connection construction for busbars and an electronic circuit board in an electrical connection box. The present invention relates according to a fourth aspect to an electrical connection box provided with an electronic circuitry to be connected with an automotive wiring harness and is particularly designed to securely position a housing accommodating connection terminals for connecting busbars in an electrical connection box and an electronic circuit board when the housing is set in a casing of the electrical connection box while being mounted on the electronic circuit board. The present invention relates according to a fifth aspect to an electrical connection box, particularly provided with an electronic circuitry to be connected with an automotive wiring harness and is particularly designed to provide a connector receptacle at a lower casing in a position facing an electronic circuit board to be accommodated in the electrical connection box. The present invention relates according to a sixth aspect to an electrical connection box, particularly provided with an electronic circuitry to be connected with an automotive wiring harness and is particularly designed to reduce a force to fit (or insert) a connection terminal to at least one busbar and an electronic circuit board and to make connection terminals connectable with all peripheral sides of an electronic circuit board.

A known electrical connection box of the above type is known e.g. from EP-A-0 259 897 and is shown in FIGS. 5(A) to 5(C). Specifically, an electronic circuit board 3 is accommodated in a container 2 separate from an electrical connection box 1. Busbar side connection portions 5a of connection terminals 5 accommodated in a housing 1a formed on an outer surface of the electrical connection box 1 are fitted to tabs 4a projecting upward from a busbar 4 accommodated in the electrical connection box 1. By fittably sliding guide portions 2b of the container 2 along guide grooves 1b formed at the outer surface of the electrical connection box 1, circuit portions 3a of the circuit board 3 are connected with circuit side connection portions 5b of the connection terminals 5 sideways, thereby electrically connecting the busbar 4 of the electrical connection box 1 with the circuit portions 3a of the circuit board 3 (See Japanese Unexamined Patent Publication No. 58-182414).

However, since the above prior art electrical connection box 1 needs the separate container 2 for accommodating the electronic circuit board 3, a production cost thereof increases. Further, the circuit portions 3a of the circuit board 3 in the container 2 may be improperly connected with the circuit side connection portions 5b of the connection terminals 5 in the housing 1a (connection failure).

The above prior art electrical connection box 1 is constructed such that the circuit portions 3a of the electronic circuit board 3 in the container 2 are fitted to the circuit side electrical connection portions 5b of the connection terminals 5 accommodated in the housing 1a sideways. Since the circuit portions (connection portions) can be provided only at one side of the circuit board 3, i.e. its leading side with respect to the insertion direction, there is a limit in the circuit construction.

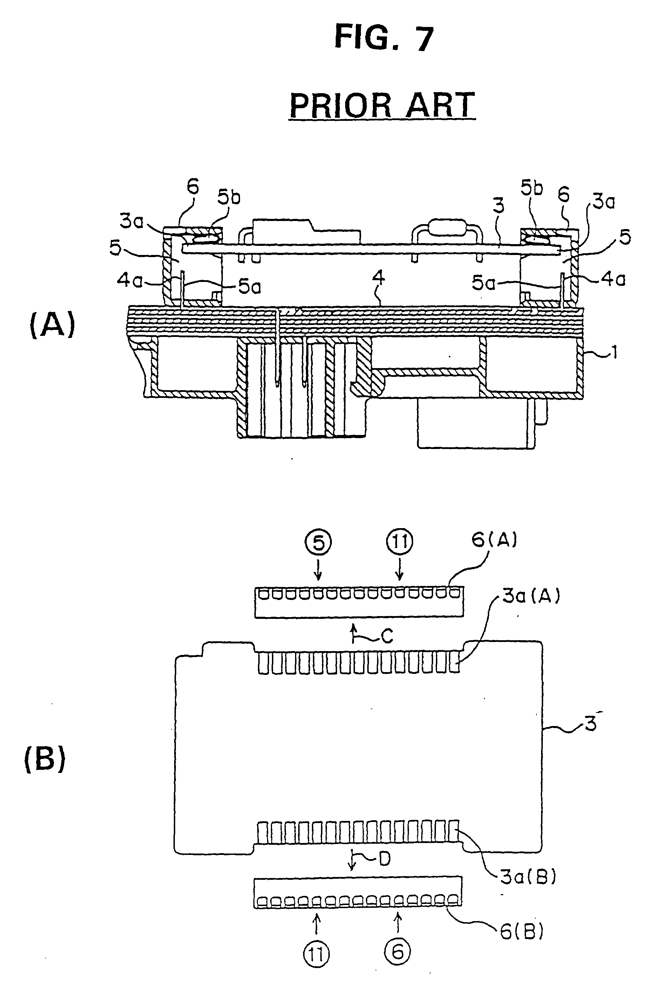

In view of the above, the applicant of the present application proposed an electrical connection box as shown in FIGS. 7(A) and 7(B). Specifically, connection terminals 5 are accommodated in housings 6. Circuit side electrical connection portions 5b of the connection terminals 5 in the housings 6 are simultaneously fitted to circuit portions 3a at the periphery (two sides in this example) of an electronic circuit board 3 sideways. In this state, busbar side electrical connection portions 5a of the connection terminals in the housings 6 are simultaneously fitted to tabs 4a of busbars 4 from above.

However, if the sequence of the connection terminals 5 in one housing 6(A) is such that no connection terminals 5 are accommodated in the 5-th and 11-th terminal chambers from the left when viewed from front (see an arrow C) and the sequence of the connection terminals 5 in the other housing 6(B) is such that no connection terminals 5 are accommodated in the 6-th and 11-th terminal chambers from the left when viewed from front (see an arrow D) as shown in FIG. 7(B), the housings 6(A) and 6(B) may be erroneously mounted on the sides of the circuit board 3 where the circuit portions 3a(B), 3a(A) are formed, respectively.

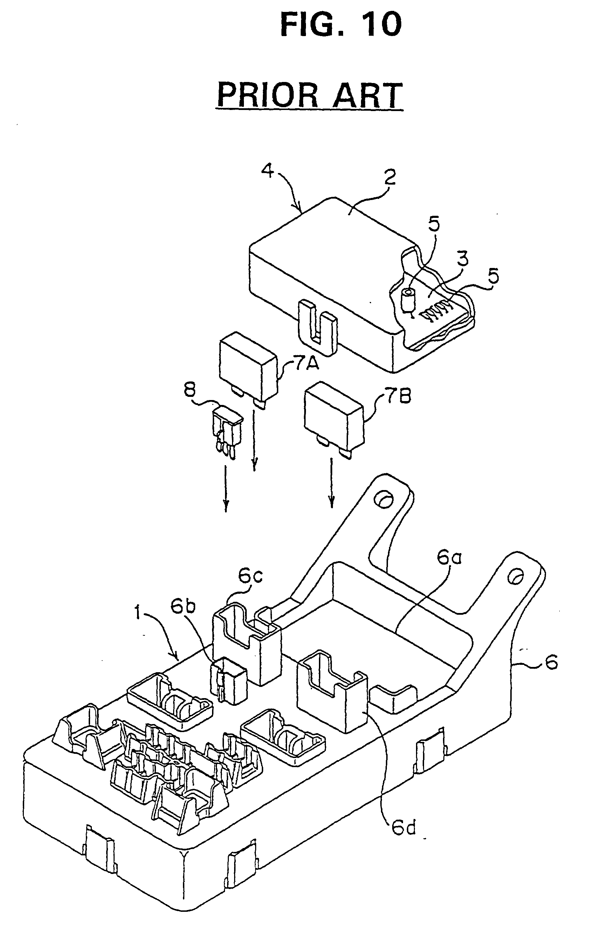

A known electrical connection box of the above type is as shown in FIG. 10 on which a relay integration 4 including an electronic circuit board 3 accommodated in a container 2 separate from an electrical connection box 1 is mounted. On the circuit board 3 accommodated in the relay integration 4, additional function providing electronic devices 5 such as an alarm buzzer which operates when a driver forgets to withdraw a car key or turn car lights off are mounted while being connected with circuit portions of the circuit board 3.

The electronic devices 5 are not essential to a wiring harness system, i.e. the function of the wiring harness can be performed even if the electronic devices 5 are not mounted. The relay integration 4 is separately preassembled by accommodating the electronic circuit board 3 having the electronic devices 5 mounted thereon in the container 2 as shown in FIG. 10. The thus prepared relay integration 4 is mounted in a relay integration containing portion 6a provided at an upper casing 6 of the electrical connection box.

On the other hand, as shown in FIG. 10, a diode 8 and noise filters 7A, 7B as essential function providing electronic devices for the construction of a wiring harness system need to be connected with the wiring harness are individually and separately mounted in receptacles 6b, 6c, 6d formed at the upper casing 6 of the electrical connection box, respectively. Instead of being mounted on the electrical connection box, those electronic devices such as a diode may be directly connected with specified wires of the wiring harness and be taped to the wiring harness obtained by bundling the wires.

Since the essential function providing electronic devices are individually and separately connected with the electrical connection box or the wiring harness, the number of operation steps increases. Further, the electrical connection box undesirably has a larger and more complicated construction. Furthermore, in the case that the electronic devices are directly connected with the wiring harness, an electrical connection check needs to be made for each connection, requiring a lot of labor.

Since the additional function providing electronic devices require the container 2 for accommodating the circuit board 3 separately from the electrical connection box 1, a production cost is increased. Further, the mounting of the relay integration accommodated in the container on the electrical connection box makes the electrical connection box even larger.

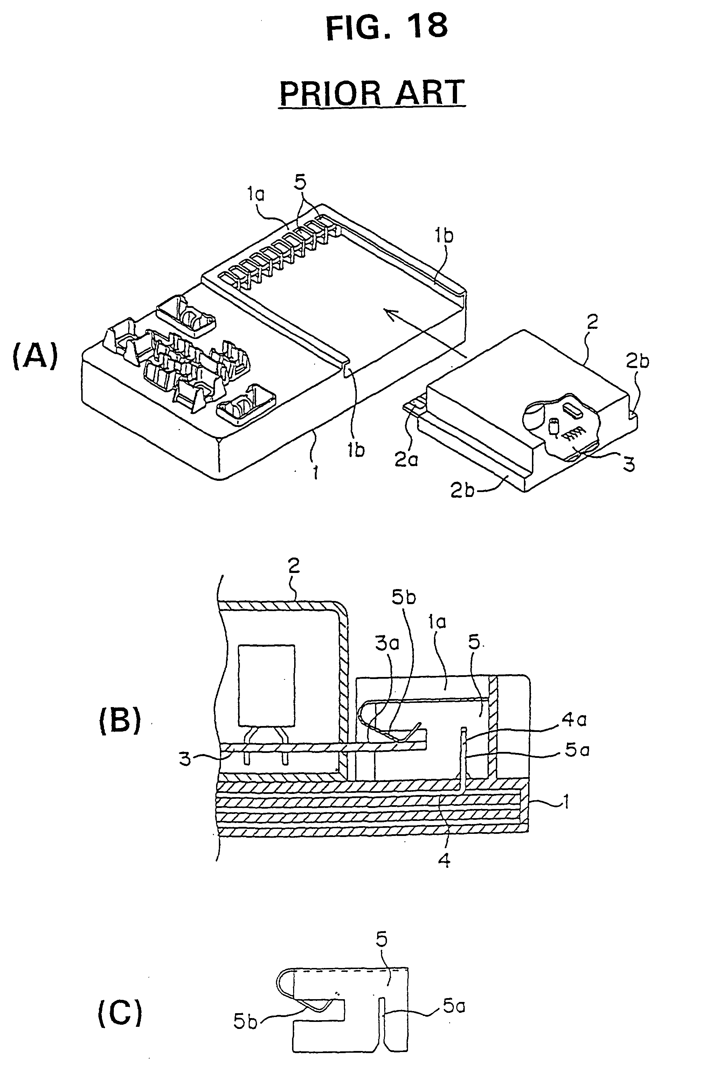

A known electrical connection box of the above type is shown in FIGS. 18(A) to 18(C). Specifically, an electronic circuit board 3 is accommodated in a container 2 separate from an electrical connection box 1. Busbar side connection portions 5a of connection terminals 5 accommodated in a housing 1a formed on an outer surface of the electrical connection box 1 are fitted to tabs 4a projecting upward from a busbar 4 accommodated in the electrical connection box 1. By fittably sliding guide portions 2b of the container 2 along guide grooves 1b formed at the outer surface of the electrical connection box 1, circuit portions 3a of the circuit board 3 are connected with circuit side connection portions 5b of the connection terminals 5 sideways, thereby electrically connecting the busbar 4 of the electrical connection box 1 with the circuit portions 3a of the circuit board 3 (See Japanese Unexamined Patent Publication No. 58-182414).

However, since the above prior art electrical connection box 1 needs the separate container 2 for accommodating the electronic circuit board 3, a production cost thereof increases. Further, the circuit portions 3a of the circuit board 3 in the container 2 may be improperly connected with the circuit side connection portions 5b of the connection terminals 5 in the housing 1a (connection failure).

However, since the above prior art electrical connection box 1 needs the separate container 2 for accommodating the electronic circuit board 3, a production cost thereof increases. In view of this, it can be considered to accommodate the electronic circuit board in the electrical connection box by disposing it above the busbars without being contained in a container. In such a case, since there is no means to fix the busbars, a connector receptacle cannot be formed at the lower casing in a position facing the electronic circuit board.

Specifically, if the connector receptacle is provided in the position facing the circuit board and a mating connector is inserted thereinto, the busbar formed with tabs to be connected with the terminals of the connector rises upon being subjected to an insertion force. Particularly, when busbars are placed one over another and the tabs used for the connection with the connector project from the uppermost busbar, this uppermost busbar is likely to rise. Since the connector receptacle cannot be provided right below the circuit board, a space is wasted and busbar designing is subject to more restriction, deterring an effective arrangement.

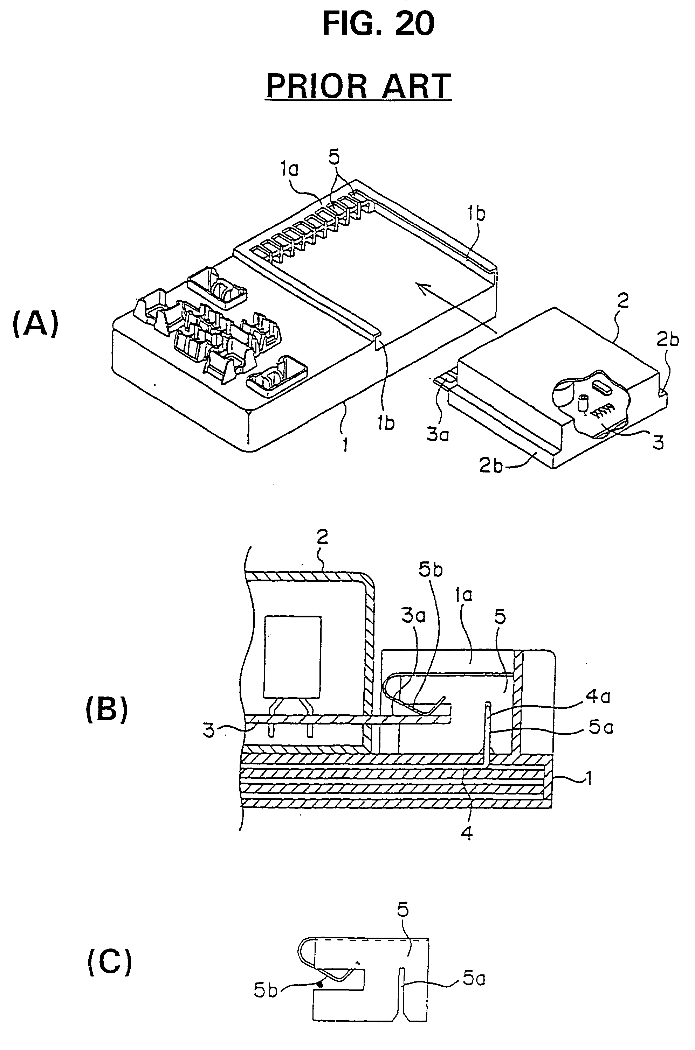

A known electrical connection box of the above type is shown in FIGS. 20(A) to 20(C). Specifically, an electronic circuit board 3 is accommodated in a container 2 separate from an electrical connection box 1. Busbar side connection portions 5a of connection terminals 5 accommodated in a housing 1a formed on an outer surface of the electrical connection box 1 are fitted to tabs 4a projecting upward from a busbar 4 accommodated in the electrical connection box 1. By fittably sliding guide portions 2b of the container 2 along guide grooves 1b formed at the outer surface of the electrical connection box 1, circuit portions 3a of the circuit board 3 are connected with circuit side connection portions 5b of the connection terminals 5 sideways, thereby electrically connecting the busbar 4 of the electrical connection box 1 with the circuit portions 3a of the circuit board 3 (See Japanese Unexamined Patent Publication No. 58-182414).

However, since the busbar side electrical connection portion 5a of the connection terminal is in the form of a slit which comes into close contact with the tab 4a of the busbar 4 in the above prior art electrical connection box 1, a large force is required to fit the electrical connection portion 5a to the tab 4a. This results in poor operability.

Further, the above prior art electrical connection box 1 is constructed such that the circuit portions 3a of the electronic circuit board 3 in the container 2 are fitted to the circuit side electrical connection portions 5b of the connection terminals 5 accommodated in the housing 1a sideways. Since the circuit portions (connection portions) can be provided only at one side of the circuit board 3, i.e. its leading side with respect to the insertion direction, there is a limit in the circuit construction.

The present invention was developed to solve the above problems, and an object thereof is to reduce a production cost and to provide an electrical connection box provided with an electronic circuitry capable of preventing a connection failure of the electronic circuit board with connection terminals to be connected with busbars, in particular tabs thereof.

This object and other objects are solved according to the invention by an electrical connection box according to claims 1. Preferred embodiments of the invention are subject of the dependent claims.

According to of the invention there is provided an electrical connection box, provided with an electronic circuitry, comprising:
casing means having at least a first casing provided with one or more supports and an second casing provided with at least one shoulder portion,
one or more busbars,
an electronic circuit board placed or placeable in proximity of a portion of the casing means, in particular of the first casing, so as to electrically connect one or more circuit portions thereof with the busbars via one or more connection terminals,
wherein the connection terminals are connected or connectable with the circuit portions, characterized in that the electronic circuit board and the terminals from a preassembly, this preassembly being set substantially along a coupling direction of the first and second casing such that the connection terminals are fitted to or connected with the busbars, and
the second casing is fitted on the first casing for pressingly fixing the electronic circuit board through the connection terminals by the shoulder portion.

According to a preferred embodiment of the invention, the electrical connection box further comprises a housing in which terminals chambers for the connection terminals are arranged substantially side by side,
wherein the housing is mounted or mountable on the periphery of the electronic circuit board, in particular substantially sideways, after the connection terminals are accommodated therein, so as to connect the connection terminals with the circuit portions.

Preferably, the second casing is, in particular lockingly, fitted on the first casing so as to substantially cover the busbars and the electronic circuit board and/or to pressingly fix the housing mounted or mountable on the electronic circuit
board by the shoulder portion.

Further preferably, the connection terminals each comprise a first or circuit side electrical connection portion to be connected with the corresponding circuit portion and a second or busbar side electrical connection portion to be connected with the corresponding busbar, in particular a tab of the busbar, the first and second electrical connection portions extending in directions at an angle different from 0° or 180°, preferably substantially normal to each other.

Further preferably, the electrical connection box further comprises one or more insulation plates, wherein the busbars and the insulation plate are stacked on the casing means, in particular on the first casing.

Most preferably, the preassembly of the connection terminals connected or connectable with the circuit portions is set substantially along a coupling direction of the first and second casing such that the connection terminals are fitted to the busbars, in particular the tabs of the busbars, and the electronic circuit board is placed on the supports projecting from the first casing.

According to a further preferred embodiment of the invention, outer surfaces of the supports projecting from the first casing are substantially in flush with outer surfaces of the first casing and in particular the periphery of the electronic circuit board is substantially in flush with the outer surfaces of the support and of the first casing.

Preferably, the second casing cannot be fitted on the first casing when the electronic circuit board is displaced.

According to still a further preferred embodiment of the invention, there is provided an electrical connection box provided with an electronic circuitry, comprising:
a lower casing provided with supports,
an upper casing provided with a shoulder portion,
insulation plates,
busbars having upward projecting tabs, the busbars and the insulation plate being stacked on the lower casing,
an electronic circuit board placed above a portion of the insulation plates and busbars stacked on the lower casing so as to electrically connect circuit portions thereof with the busbars via connection terminals, the connection terminals each comprising a circuit side electrical connection portion to be connected with the corresponding circuit portion and a busbar side electrical connection portion to be connected with the corresponding tab of the busbar, the first and second electrical connection portions extending in directions normal to each other,
a housing in which terminals chambers for the connection terminals are arranged side by side,
wherein the housing is mounted on the periphery of the electronic circuit board sideways after the connection terminals are accommodated therein, so as to connect the connection terminals with the circuit portions, and this preassembly is set from above such that the connection terminals are fitted to the tabs of the busbars and the electronic circuit board is placed on the upper faces of the supports projecting from the lower casing, and
the upper casing is lockingly fitted on the lower casing so as to cover the busbars and the electronic circuit board while pressingly fixing the upper surface of the housing mounted on the electronic circuit board by the shoulder portion.

The above electrical connection box is assembled as follows. The busbars comprising the upward projecting tabs are set on the upper surface of the lower casing from above. The circuit side electrical connection portions of the connection terminals accommodated in the housing are fitted to the circuit portions of the electronic circuit board sideways. The electronic circuit board is set on the upper faces of the supports provided at the upper surface of the lower casing while the busbar side electrical connection portions of the connection terminals are fitted to the tabs of the busbars from above. The upper casing is fitted and locked with the lower casing. At this time, the electronic circuit board is pressed against the upper faces of the supports via the housing by the shoulder portion provided at a portion of the upper casing.

As described above, in the electrical connection box according to the invention, the electronic circuit board is rationally accommodated in a containing portion provided in a casing comprised of the upper and lower casings without being contained in a container.

As is clear from the above description, according to the inventive electrical connection box provided with an electronic circuitry, the circuit side electrical connection portions of the connection terminals in the housing are fitted to the circuit portions of the electronic circuit board sideways; the electronic circuit board is set on the supports of the lower casing while the busbar side electrical connection portions of the connection terminals are fitted to the tabs of the busbars set on the lower casing from above; and, when the upper casing is fitted and locked with the lower casing in this state, the electronic circuit board is automatically fixed in the electrical connection box by being pressed against the supports via the housings by the shoulder portions provided at the upper casing. Accordingly, a production cost can be reduced by eliminating the container for the electronic circuit board which is necessary with the prior art electrical connection box.

Preferably, outer surfaces of the supports projecting from the lower casing are in flush with outer surfaces of the lower casing and the periphery of the electronic circuit board is in flush with the outer surfaces of the support and of the lower casing so that the upper casing cannot be fitted on the lower casing when the electronic circuit board is displaced.

With the above arrangement, when the electronic circuit board set on the supports is displaced, i.e. when the connection terminals in the housing are not properly connected with the tabs of the busbars, the electronic circuit board obstructs the engagement of the upper casing with the lower casing. In other words, if an arrangement is made such that the upper casing cannot be fitted on the lower casing when the electronic circuit board is displaced, it can be easily known that the busbar side electrical connection portions of the connection terminals in the housings are improperly connected with the tabs of the busbars. Therefore, the improper mounting of the electronic circuit board can be prevented. Accordingly, improper mounting or connection of the electronic circuit board can be easily seen and, hence, can be prevented by properly correcting the connection.

According to a preferred embodiment of the invention, essential function providing electronic devices for a wiring harness system and additional function providing electronic devices are mounted on the electronic circuit board.

Accordingly the number of operation steps is reduced by mounting essential function providing electronic devices which have conventionally separately mounted as well as additional function providing electronic devices on an electronic circuit board and to downsize an electrical connection box by eliminating a container for the electronic circuit board and accommodating the electronic circuit board in the electrical connection box comprised of lower and upper casings.

According to a preferred embodiment of the invention, the electrical connection box further comprises one or more insulation plates being stacked with the one or more busbars in a space defined by the casing means.

Preferably, the connection terminals each comprise a first or circuit side electrical connection portion to be connected with the corresponding circuit portion and a second or busbar side electrical connection portion to be connected with the corresponding busbar, the first and second electrical connection portions extending in directions at an angle different from 0° or 180°, in particular substantially normal to each other.

Further preferably, the one or more connection terminals are accommodated in terminal chambers, particularly arranged side by side, in a housing,
the housing is fitted to a side of the electronic circuit board, particularly sideways, to connect the connection terminals with the circuit portions and/or
wherein the electronic circuit board preassembled with a housing is placed on supports projecting from the casing means, in particular while the connection terminals in the housing are fitted to the busbars, and/or
wherein the casing means comprises a first or upper casing and a second or lower casing, the first casing being so fitted on the second casing as to substantially cover the busbars and/or the electronic circuit board.

According to a further preferred embodiment of the invention, there is provided an electrical connection box provided with an electronic circuitry to be connected with a wiring harness, comprising:
lower and upper casings,
insulation plates and busbars stacked in a space defined by the lower and upper casings, busbars having tabs projecting therefrom,
an electronic circuit board accommodated in an upper portion of the space and comprising circuit portions, and
connection terminals for electrically connecting the circuit portions of the electronic circuit board and the tabs of the busbars,
wherein essential function providing electronic devices for a wiring harness system such as a diode and a noise filter and additional function providing electronic devices such as an alarm buzzer which operates when a driver forget to turn car lights off or to withdraw a car key are mounted on the electronic circuit board.

If the essential function providing electronic devices such as a diode and a noise filter are mounted, together with the additional function providing electronic devices such as an alarm buzzer, on the electronic circuit board to be accommodated in the electrical connection box and are connected with the busbars accommodated in the electrical connection box via the connection terminals as above, they need not separately be connected with the wiring harness or the electrical connection box as in the prior art. As a result, the number of operation steps can be reduced; an electrical connection check can easily be made; and the electrical connection box can be made smaller. Further, since the electronic circuit board is accommodated particularly in an electronic circuitry containing portion provided in the casing comprised of the lower and upper casings, a special container which is necessary in the prior art can be eliminated, thereby reducing a production cost and enabling the downsizing of the electrical connection box.

As is clear from the above description, the essential function providing electronic devices which have conventionally separately and directly been connected with the electrical connection box or the wiring harness and the additional function providing electronic devices which have conventionally mounted on the electronic circuit board accommodated in the special container are mounted on a single electronic circuit board and is accommodated in the casing of the electrical connection box comprised of the lower and upper casings. Accordingly, the electronic devices can be assembled into the electrical connection box by a single assembling operation, thereby considerably reducing the number of operation steps during the assembly. Further, an electrical connection check for these electronic devices can be easily made.

Further, unlike the prior art, the container for accommodating the electronic circuit board can be eliminated, thereby reducing a production cost and enabling the downsizing of the electrical connection box.

Preferably, the connection terminals each comprise an electrical connection portion to be connected with the corresponding circuit portion and an electrical connection portion to be connected with the corresponding tab of the busbar, the electrical connection portions extending in directions normal to each other, and are accommodated in terminal chambers arranged side by side in a housing. Preferably, the housing accommodating the connection terminals is fitted to a side of the electronic circuit board sideways to connect the connection terminals with the circuit portions; the electronic circuit board preassembled with the housing is placed on the upper faces of supports projecting from the lower casing while the connection terminals in the housing are fitted to the tabs of the busbars from above; and the upper casing is so fitted on the lower casing as to cover the busbars and the electronic circuit board.

The electrical connection box is assembled as follows. The busbars having upward projecting tabs are placed from above on the upper surface of the lower casing of the electrical connection box. The housing is fitted to the electronic circuit board sideways so as to connect the circuit side electrical connection portions with the circuit portions of the electronic circuit board. The electronic circuit board preassembled with the housing is placed on the upper faces of the supports provided at the upper surface of the lower casing while the busbar side electrical connection portions of the connection terminals are fitted to the tabs of the busbars from above. Finally, the upper casing is fitted and locked with the lower casing, thereby pressing the electronic circuit board against the upper faces of the supports via the housing.

According to a further preferred embodiment of the invention, there is provided an electrical connection box provided particularly with an electronic circuitry, comprising:
casing means,
one or more insulation plates and one or more busbars,
an electronic circuit board having circuit portions,
at least one housing being fittable to a peripheral side of the electronic circuit board, and
guide means which project from the casing means and/or the insulation plate and come into contact with the housing so as to position the housing.

Thus a production cost is reduced by eliminating a container for accommodating an electronic circuit board and to provide an electrical connection box provided with an electronic circuitry capable of preventing a connection failure of the electronic circuit board with connection terminals to be connected with tabs of busbars.

According to a preferred embodiment of the invention, the housing accommodates one or more connection terminals having electrical connection portions to be connected with the circuit portions of the electronic circuit board and with the busbars, the housing being fittable to the peripheral side of the electronic circuit board, in particular sideways, so as to connect the connection terminals and the circuit portions, the connection terminals being fittable to the busbars, particularly from above.

Preferably, at least two housings are mounted or mountable on the substantially opposite peripheral sides of the electronic circuit board and wherein the guide means, in particular comprising guide ribs, are provided substantially facing each other so that the housings mounted or mountable on the electronic circuit board are or can be held by the guide means, in particular by the guide ribs.

Further preferably, the electronic circuit board is placed on supports projecting from the casing means, in particular from a lower casing, and wherein a shoulder portion for pressingly fixing the housing is provided at the casing means, in particular at an upper casing to be fitted and locked with the lower casing.

Most preferably, the housing comprises guide projections for interaction with the guide means provided at the casing means and/or at the insulation plate.

According to a further preferred embodiment of the invention, there is provided an electrical connection box provided with an electronic circuitry, comprising:
a lower casing:
insulation plates and busbars stacked on the lower casing, the busbars being formed with tabs,
an electronic circuit board to be located above a portion of the insulation plates and busbars and having circuit portions,
at least one housing for accommodating connection terminals having electrical connection portions to be connected with the circuit portions of the electronic circuit board and with the tabs of the busbars, the housing being fittable to a peripheral side of the electronic circuit board sideways so as to connect the connection terminals and the circuit portions, the connection terminals accommodated in the housing mounted on the electronic circuit board being fittable to the tabs of the busbars from above, and
guide ribs which project from the lower casing and the insulation plate and come into contact with the outer surface of the housing being set from above so as to position the housing.

The above electrical connection box is assembled as follows. The busbars having the upward projecting tabs are set on the upper surface of the lower casing from above. The housing is mounted on the electronic circuit board sideways so as to connect the circuit side electrical connection portions of the connection terminals accommodated in the housing with the circuit portions of the electronic circuit board. The busbar side electrical connection portions of the connection terminals in the housing mounted on the electronic circuit board are fitted to the tabs of the busbars from above. At this time, the housing is inserted while being held in sliding contact with the guide ribs so as to be located in a specified position. As a result, the busbar side electrical connection portions can be securely fitted and connected with the tabs of the busbars. Finally, the upper casing is fitted and locked with the lower casing. If the housing mounted on the electronic circuit board is restrictively guided by the guide ribs when being set in the electrical connection box, it can be securely located in the specified position. As a result, the connection terminals accommodated in the housing can be securely connected with the circuit portions of the electronic circuit board and with the tabs of the busbars, thereby preventing an improper connection.

In the above electrical connection box, the electronic circuit board is rationally accommodated in an electronic circuitry containing portion provided in a casing comprised of the lower and upper casings without being contained in a separate container.

As is clear from the above description, with the inventive electrical connection box provided with an electronic circuitry, when the electronic and/or electric circuit board, being preferably at least partially preassembled with the housings, is set from above while the connection terminals are fitted to the tabs of the busbars, the housings accommodating the connection terminals are restrictingly guided by the guide ribs projecting from the lower casing and the insulation plate. Accordingly, the housings can be automatically inserted to and held in the proper positions. Therefore, the connection terminals in the housings can be securely and properly connected with the tabs of the busbars, thereby improving the reliability of the electrical connection.

In addition to the lateral positioning by the guide ribs, the circuit board is positioned with respect to the vertical direction by being tightly held between the supports projecting from the lower casing and the shoulder portions provided at the upper casing. Accordingly, the connection terminals can be held securely connected with the tabs of the busbars and with the circuit portions of the electronic circuit board.

Preferably, an upper portion of each guide rib is thinned by being slantingly cut away. Such thinned guide ribs facilitates the mounting of the electronic circuit board preassembled with the housing and reduces a required insertion force.

Preferably, two housings are mounted on the opposite peripheral sides of the electronic circuit board, and the guide ribs are provided to face each other so that the housings mounted on the electronic circuit board are held by the guide ribs.

Preferably, the electronic circuit board may be placed on supports projecting from the lower casing and a shoulder portion for pressingly fixing the upper surface of the housing may be provided at the upper casing to be fitted and locked with the lower casing.

If the electronic circuit board is fixed by being tightly held between the supports and the shoulder portion as above, it can be positioned with respect to the vertical direction. Since the guide ribs perform a lateral positioning, the electronic circuit board and the housing can be located in the specified position, with the result that the connection terminals in the housing can be securely connected with the circuit portions and the busbars.

These and other objects, features and advantages of the present invention will become more apparent upon a reading of the following detailed description and accompanying drawings in which:
FIG. 1 is an exploded perspective view of an electrical connection box according to a preterred embodiment of the invention before an upper casing is fitted,
FIG. 2 is an exploded perspective view of the electrical connection box,
FIG. 3 is an exploded side view in section of the electrical connection box,
FIG. 4 is a side view in section of the assembled electrical connection box, and

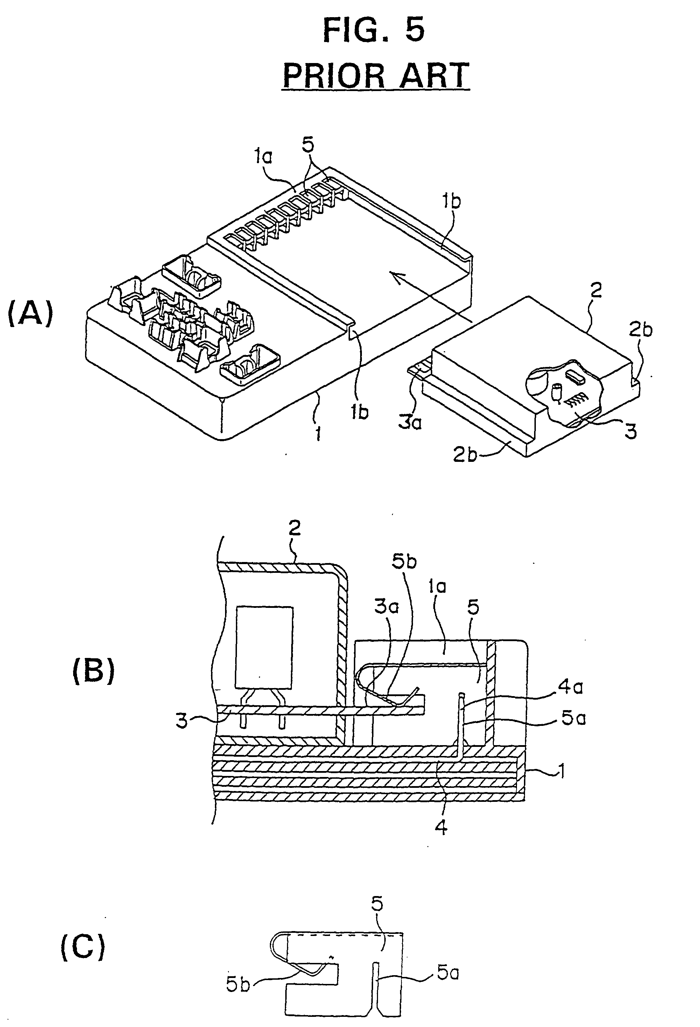

FIGS. 5(A) to 5(C) shows a prior art electrical connection box, wherein FIG. 5(A) is an exploded perspective view of the electrical connection box and a container, FIG. 5(B) is a side view in section of an assembly of the electrical connection box and the container, and FIG. 5(C) is a side view of a connection terminal.

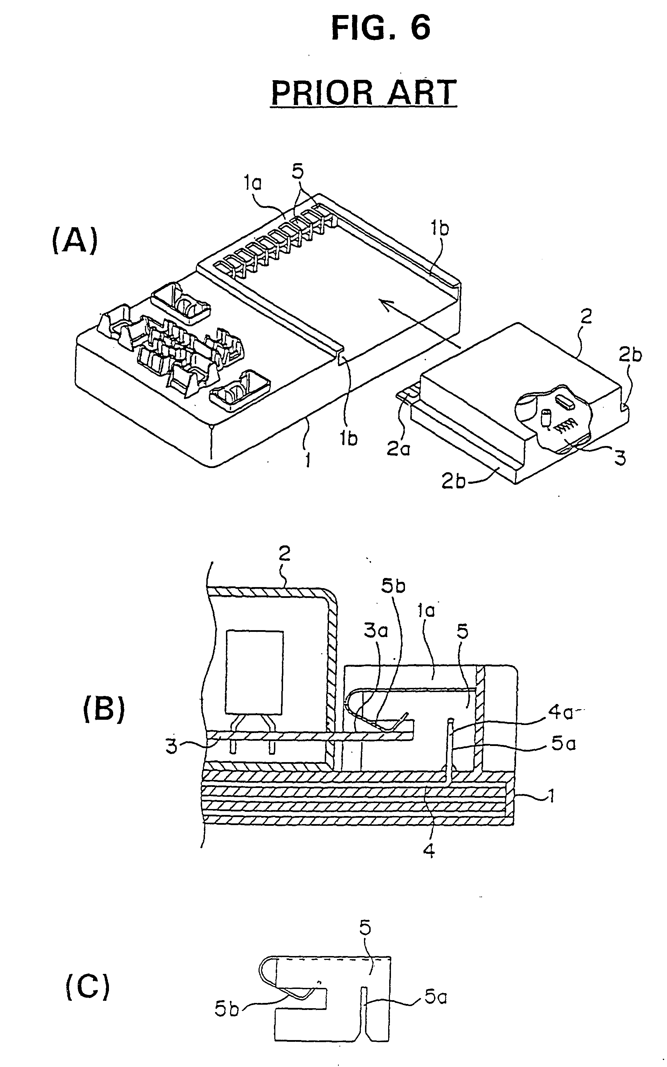

FIGS. 6(A) to 6(C) shows a prior art electrical connection box, wherein FIG. 6(A) is an exploded perspective view of the electrical connection box and a circuit board container, FIG. 6(B) is a partial side view in section of the electrical connection box and the container in their assembled state, and FIG. 6(C) is a side view of a connection terminal, and
FIG. 7(A) is a section of another prior art electrical connection box, and FIG. 7(B) is an exploded plan view of housings and an electronic circuit board.
FIG. 8 is an exploded perspective view of an electrical connection box according to a preferred embodiment of the invention before an upper casing is fitted,
FIG. 9 is an exploded perspective view of the electrical connection box, and
FIG. 10 is an exploded perspective view of a prior art electrical connection box provided with an electronic circuitry.
FIG. 11 is a perspective view of an electrical connection box according to a further preferred embodiment of the invention before an upper casing is fitted,
FIG. 12 is an exploded perspective view of the electrical connection box,
FIG. 13 is an exploded section of the electrical connection box,
FIGS. 14(A) and 14(B) are partial sections showing the insertion of a housing mounted on an electronic circuit board into a casing,
FIG. 15 is a section showing the connection of connection terminals in the housings with tabs of busbars,
FIG. 16 is a section of the assembled electrical connection box,
FIG. 17 is a perspective view of a modification of the housing, and
FIGS. 18(A) to 18(C) show a prior art electrical connection box, wherein FIG. 18(A) is an exploded perspective view of the electrical connection box and a container, FIG. 18(B) is a side view in section of an assembly of the electrical connection box and the container, and FIG. 18(C) is a side view of a connection terminal.

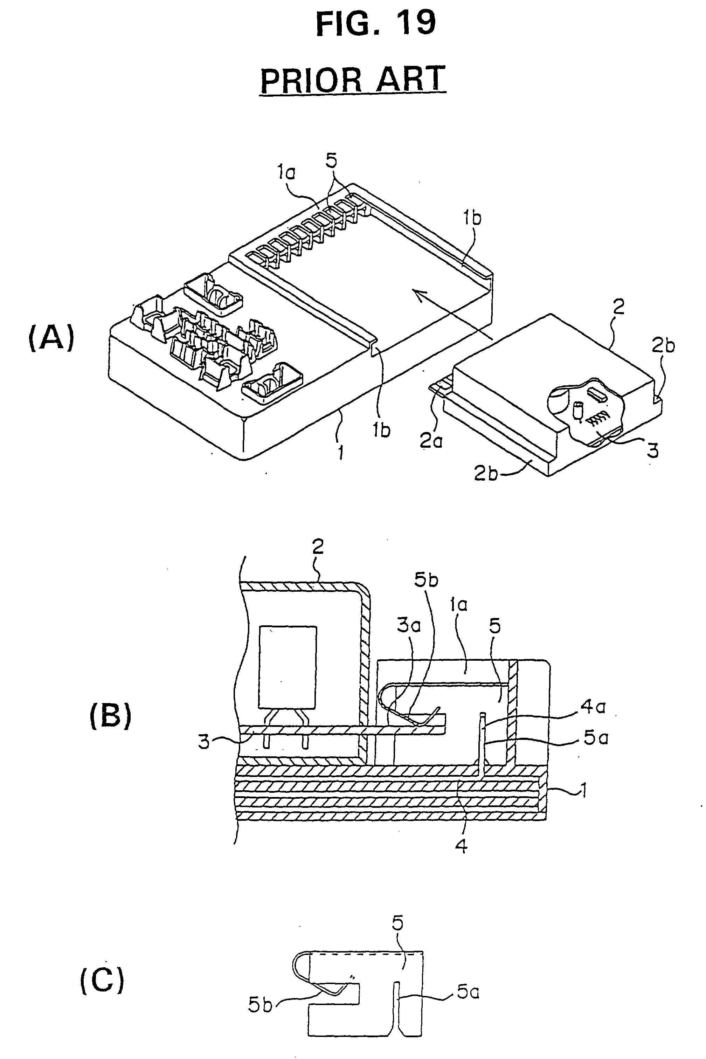

FIGS. 19(A) to 19(C) shows a prior art electrical connection box, wherein FIG. 19(A) is an exploded perspective view of the electrical connection box and a container, FIG. 19(B) is a side view in section of an assembly of the electrical connection box and the container, and FIG. 19(C) is a side view of a connection terminal.
FIGS. 20(A) to 20(C) shows a prior art electrical connection box, wherein FIG. 20(A) is an exploded perspective view of the electrical connection box and a container, FIG. 20(B) is a side view in section of an assembly of the electrical connection box and the container, and FIG. 20(C) is a side view of a connection terminal.

In the following description identical or similar elements are denote with identical or similar reference numerals.

Next embodiments according to a preferred embodiment of the invention will be described.

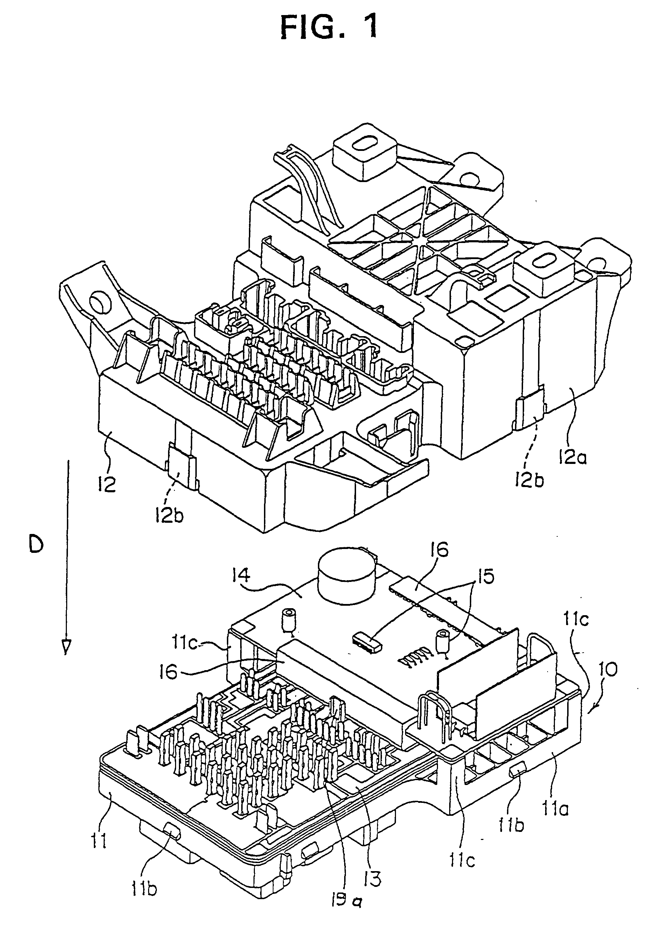

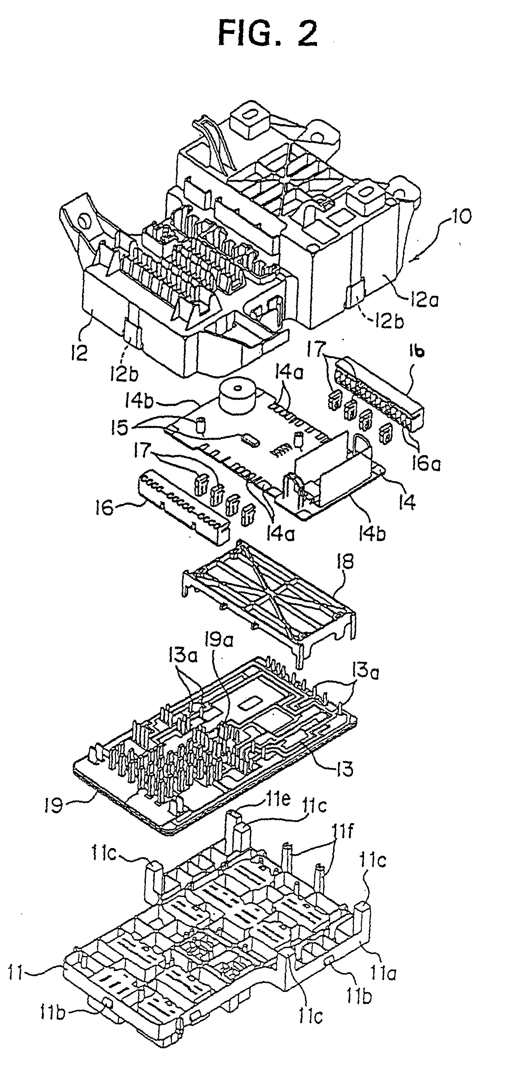

As shown in FIGS. 1 to 3, an electrical connection box 10 includes particularly box-shaped lower and upper casings 11, 12 e.g. of synthetic resin. When the upper casing 12 is fitted on the lower casing 11 along a coupling or fitting direction D, locking claws 12b formed on outer surfaces 12a of the upper casing 12 are engaged with locking claws 11b formed on outer surfaces 11a of the lower casing 11, with the result that the lower and upper casings 11, 12 are locked.

Busbars 13 having upward projecting tabs 13a are set and positioned on the upper surface of the lower casing 11 from above.

A busbar pressing cover 18 for pressing the busbars 13 against the upper surface of the lower casing 11 may be preferably provided.

A total of preferably four supports 11c project to a level substantially above the busbars 13 in two right corner positions and two intermediate positions of the upper surface of the lower casing 11 with respect to its longitudinal direction. The supports 11c are formed such that their outer surfaces are in flush with the outer surfaces 11a of the lower casing 11.

One of the supports 11c in the right corner positions stands inward of a column 11e standing on the lower casing 11. Outer surfaces of the column 11e are in flush with the outer surfaces 11a of the lower casing 11.

An electronic circuitry containing portion is provided above the supports 11c. An electronic circuit board 14 to be placed in the electronic circuitry containing portion is rectangular-shaped such that its four corners can be placed on the upper faces of the supports 11c of the lower casing 11. At the corner of the circuit board 14 corresponding to the column 11e, a notch (not specifically shown) is formed so as to avoid the column 11e.

The lower casing 11 is also formed with guide ribs 11f for positioning housings 16 (described later) mounted substantially at the opposite sides of the circuit board 14 preferably when the circuit board 14 is set on the upper faces of the supports 11c from above. An insulation plate 19 on which the busbars 13 are placed is also formed with guide ribs 19a for the same purpose.

A variety of electronic and/or electric devices 15 are mounted on the upper surface of the circuit board 14, and a printed circuit (not specifically shown) for electrically connecting the electronic devices is formed on the lower surface of the circuit board.

Circuit portions 14a continuous with the printed circuit are formed on one or both of the opposite sides of the upper surface of the circuit board 14.

The housings 16 e.g. made of synthetic resin are substantially in the form of a harmonica. Connection terminals 17 are accommodated in a multitude of terminal chambers 16a arranged side by side in each housing 16. Each connection terminal 17 includes a circuit side electrical connection portion 17a which is fitted or fittable to the corresponding circuit portion 14a of the circuit board 14 sideways for the electrical connection and a busbar side electrical connection portion 17b which is fitted or fittable to the corresponding tab 13a of the busbar 13 in the lower casing 11 preferably from above for the electrical connection. The electrical connection portions 17a, 17b extend in directions at an angle different from 0° or 180°, in particular substantially normal to each other.

The electronic circuit board 14 is preassembled with the respective housings 16 by fitting the circuit side electrical connection portions 17a of the connection terminals 17 accommodated therein to the circuit portions 14a of the circuit board 14.

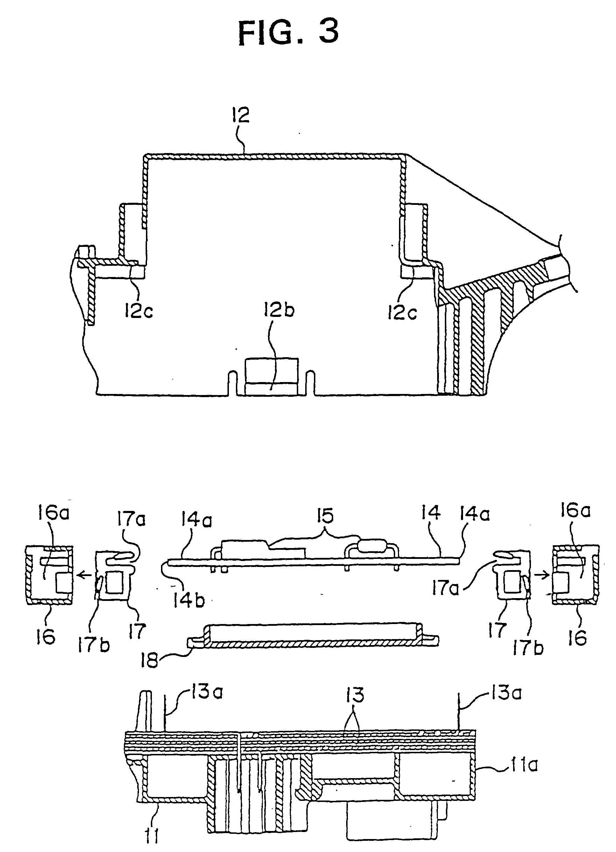

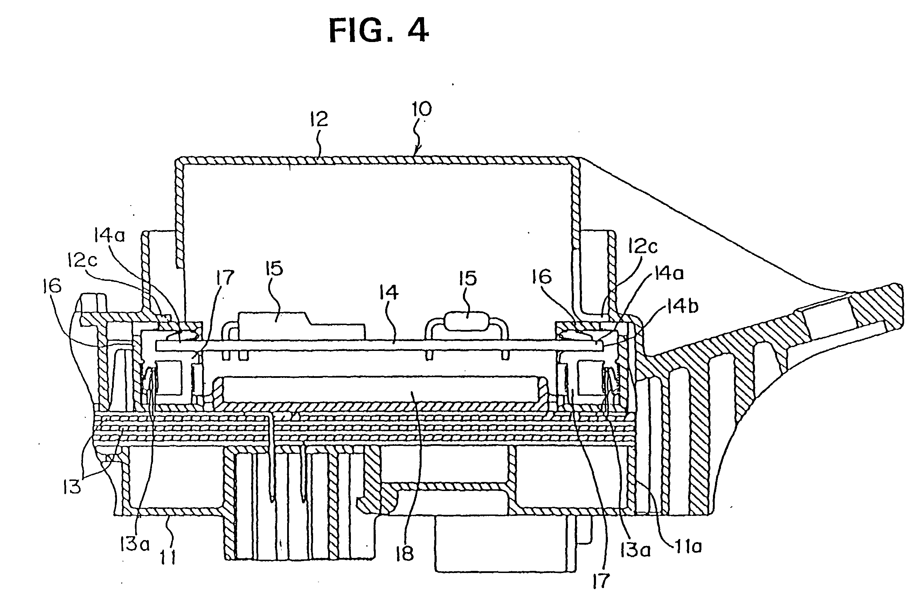

As shown in FIGS. 3 and 4, shoulder portions 12c which come into contact with the upper surfaces of the housings 16 when the upper casing 12 is fitted and locked with the lower casing 11 are formed at upper portions of inner surfaces of the upper casing 12. These shoulder portions 12c press the four corners of the circuit board 14 against the upper faces of the supports 11c via the housings 16.

As described above, the outer surfaces of the supports 11c of the lower casing 11 are substantially in flush with the outer surfaces 11a of the lower casing 11. The circuit board 14 is formed such that its periphery 14b is substantially in flush with the outer surfaces of the supports 11c and the outer surfaces 11a of the lower casing 11. Accordingly, if the upper casing 12 is fitted on the lower casing 11 with the circuit board 14 displaced, bottom portions of the inner surfaces of the upper casing 12 come into contact with the upper surface of the circuit board 14 protruding from the outer surfaces 11a of the lower casing 11. As a result, the upper casing 11 cannot be fitted.

Before the circuit board 14 is assembled into the electrical connection box 10, the connection terminals 17 are set in the terminal chambers 16a of the respective housings 16, and the electrical connection portions 17a of the connection terminals 17 are fitted to the circuit portions 14a substantially on the opposite sides of the circuit board 14 sideways.

Subsequently, the circuit board 14 is set on the upper faces of the supports 11c of the lower casing 11 while the electrical connection portions 17b of the connection terminals 17 set in the housings 16 are fitted to the tabs 13a of the busbars set on the upper surface of the lower casing 11 from above.

At this time, if the busbars 13 set on the upper surface of the lower casing 11 are pressed by the busbar pressing cover 18 before the circuit board 14 is set on the upper faces of the supports 11c, they can be fixed in advance by being pressed.

Further, since the housings 16 and the circuit board 14 are positioned by the guide ribs 11f, 19a when the circuit board 14 is set on the upper faces of the supports 11c, the busbar side electrical connection portions 17b of the connection terminals 17 set in the housings 16 can be smoothly fitted to the tabs 13a of the busbars 13.

When the upper casing 12 is fitted on the lower casing 11 after the circuit board 14 is set as above, thereby pressing the circuit board 14 against the supports 11c of the lower casing 11 via the housings 16 by the shoulder portions 12c, the circuit board 14 is automatically fixed in the lower and upper casings 11, 12. By pressing the housings 16, the electrical connection portions 17a, 17b can be securely connected with the circuit portions 14a of the circuit 14 and the tabs 13a of the busbars 13, respectively.

By assembling the electrical connection box 10 as above, unlike the prior art, the container for the circuit board 14 can be eliminated and, therefore, a production cost can be reduced.

The busbar side electrical connection portions 17b of the connection terminals 17 in the housings 16 may be improperly connected with the tabs 13a of the busbars 13 if the circuit board 14 is displaced while the upper casing 12 is fitted on the lower casing 11. In such a case, the periphery 14b of the circuit board 14 protrudes from the outer surfaces of the supports 11c and of the lower casing 11, and the bottom portion of the inner surfaces of the upper casing 12 come into contact with the upper surface of the circuit board 14. As a result, the upper casing 12 cannot be fitted.

Since the improper mounting or connection of the housings 16 of the circuit board 14 can be easily known, it can be prevented by properly correcting the connection.

Next embodiments according to a further preferred embodiment of the invention will be described.

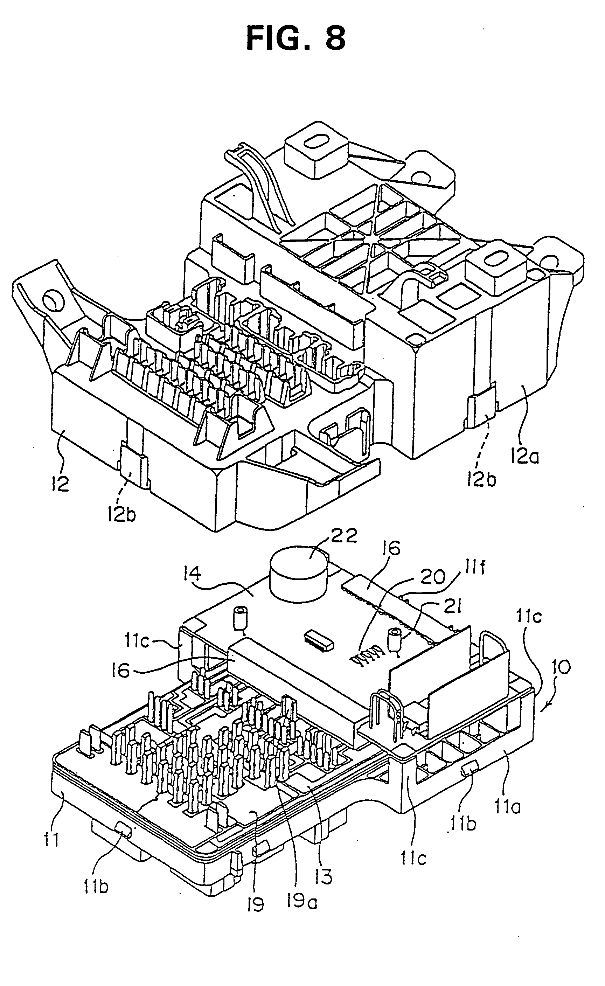

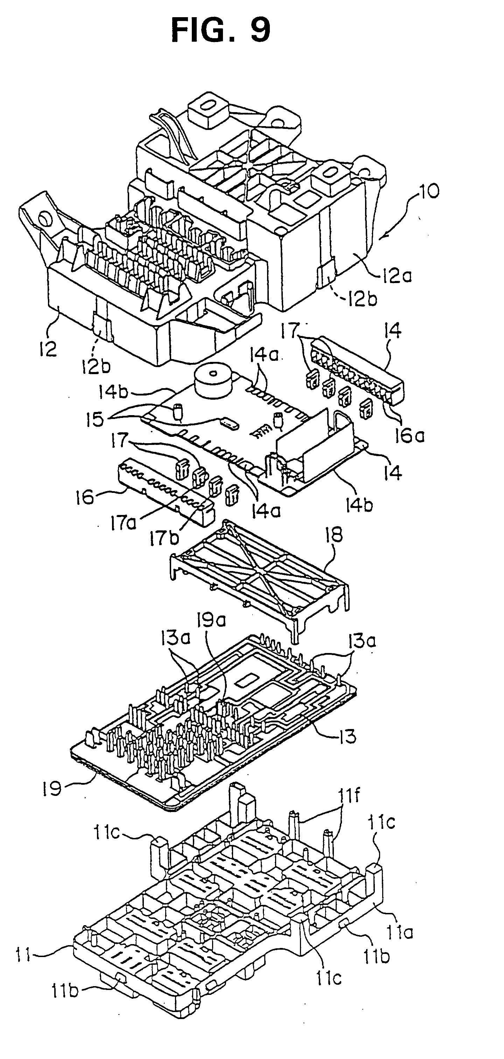

As shown in FIGS. 8 and 9, an electrical connection box 10 includes box-shaped lower and upper casings 11, 12 e.g. of synthetic resin. When the upper casing 12 is fitted on the lower casing 11, locking claws 12b formed on outer surfaces 12a of the upper casing 12 are engaged with locking claws 11b formed on outer surfaces 11a of the lower casing 11, with the result that the lower and upper casings 11, 12 are locked. A total of preferably four supports 11c project to a level substantially above the busbars 13 in two right corner positions and two intermediate positions of the upper surface of the lower casing 11 with respect to its longitudinal direction.

Busbars 13 having upward projecting tabs 13a are set and positioned on the upper surface of the lower casing 11 from above. The supports 11c project above the uppermost busbar 13, and a space above the supports 11c serves as an electronic circuitry containing portion. An electronic circuit board 14 is placed or placeable on the supports 11c.

The electronic circuit board 14 to be placed on the supports 11c is substantially rectangular-shaped such that its four corners can be substantially placed on the upper faces of the supports 11c of the lower casing 11. At the left corner of the circuit board 14 corresponding to the corner of the lower casing 11 where a column 11e is provided, a notch (not specifically shown) is formed so as to avoid the column 11e.

The electronic circuit board 14 is formed with printed circuits (not shown) on its upper and lower surfaces. A diode 20, a noise filter (capacitor) 21 and like essential function providing electronic devices, and an alarm buzzer 22 for giving a buzzing sound when a driver forgets to withdraw a car key or to turn car lights off and like additional function providing electronic devices are mounted on the circuit board 14 while being connected with the printed circuits. The additional function providing electronic devices are accommodated in a relay integration in prior art electrical connection boxes. As shown in FIG. 9, circuit portions 14a continuous with the printed circuits are formed on the opposite sides of the upper surface of the circuit board 14. The printed circuit may be formed on only either one of the upper and lower surfaces of the circuit board 14 for the electrical connection with the electronic devices to be mounted.

In this way, the essential function providing electronic devices for the construction of the wiring harness system which have conventionally separately been connected with the electrical connection box or the wiring harness are mounted, together with the additional function providing electronic devices, on the circuit board 14 to be accommodated in the casing comprised of the lower and upper casings 11, 12.

The lower casing 11 is also formed with guide ribs 11f for positioning housings 16 (described later) mounted at the opposite sides of the circuit board 14 when the circuit board 14 is set on the upper faces of the supports 11c from above. An insulation plate 19 on which the busbars 13 are placed is also formed with guide ribs 19a for the same purpose.

The housings 16 are made e.g. of synthetic resin and substantially in the form of a harmonica. Connection terminals 17 are accommodated in a multitude of terminal chambers 16a arranged side by side in each housing 16. Each connection terminal 17 includes a circuit side electrical connection portion 17a which is fitted to the corresponding circuit portion 14a of the circuit board 14 sideways for the electrical connection and a busbar side electrical connection portion 17b which is fitted to the corresponding tab 13a of the busbar 13 in the lower casing 11 from substantially above for the electrical connection. The electrical connection portions 17a, 17b extend in directions at an angle different from 0° or 180°, preferably substantially normal to each other.

The electronic circuit board 14 is preferably preassembled with the respective housings 16 by fitting the circuit side electrical connection portions 17a of the connection terminals 17 accommodated therein to the circuit portions 14a of the circuit board 14.

Shoulder portions (not shown) which come into contact with the upper surfaces of the housings 16 when the upper casing 12 is fitted and locked with the lower casing 11 are formed at upper portions of inner surfaces of the upper casing 12. These shoulder portions 12c press the four corners of the circuit board 14 against the upper faces of the supports 11c via the housings 16.

As described above, the outer surfaces of the supports 11c of the lower casing 11 are substantially in flush with the outer surfaces 11a of the lower casing 11. The electronic circuit board 14 is formed such that its periphery 14b is substantially in flush with the outer surfaces of the supports 11c and the outer surfaces 11a of the lower casing 11. Accordingly, if the upper casing 12 is fitted on the lower casing 11 with the circuit board 14 displaced, bottom portions of the inner surfaces of the upper casing 12 come into contact with the upper surface of the circuit board 14 protruding from the outer surfaces 11a of the lower casing 11. As a result, the upper casing 11 cannot be fitted.

Before the electronic circuit board 14 is assembled into the electrical connection box 10, the connection terminals 17 are set in the terminal chambers 16a of the respective housings 16, and the circuit side electrical connection portions 17a of the connection terminals 17 are fitted to the circuit portions 14a of the opposite sides of the circuit board 14 sideways. As described above, the essential function providing electronic devices such as a diode and a noise filter and the additional function providing electronic devices such as an alarm buzzer are mounted or mountable on the circuit board 14.

Subsequently, the circuit board 14 is set on the upper faces of the supports 11c of the lower casing 11 while the busbar side electrical connection portions 17b of the connection terminals 17 set in the housings 16 are fitted to the busbars, in particular the to the tabs 13a thereof, set on the upper surface of the lower casing 11 substantially from above.

Since the housings 16 and the circuit board 14 are positioned by the guide ribs 11f, 19b when the circuit board 14 is set on the upper faces of the supports 11c, the busbar side electrical connection portions 17b of the connection terminals 17 set in the housings 16 can be smoothly fitted to the tabs 13a of the busbars 13.

When the upper casing 12 is fitted on the lower casing 11 after the circuit board 14 is set, thereby pressing the circuit board 14 against the supports 11c of the lower casing 11 via the housings 16 by the shoulder portions 12c, the circuit board 14 is automatically fixed in the lower and upper casings 11, 12.

If the electrical connection box is assembled as above, the essential function providing electronic devices which have conventionally separately been connected with the electrical connection box or the wiring harness can be assembled into the electrical connection box by one assembling operation after being mounted on a signal electronic circuit board 14. Simultaneously, the essential function providing electronic devices are connected with the busbars 13 via the connection terminals 17.

As is clear from the above description, in the electrical connection box according to the third aspect of the invention, provided particularly with an electronic circuitry, the essential function providing electronic devices which have conventionally separately and directly been connected with the electrical connection box or the wiring harness and the additional function providing electronic devices which have conventionally mounted on the electronic circuit board accommodated in the special container are mounted on a single electronic circuit board and is accommodated in the casing of the electrical connection box comprised of the lower and upper casings. Accordingly, the electronic devices can be assembled into the electrical connection box by a single assembling operation, thereby considerably reducing the number of operation steps during the assembly. Further, an electrical connection check for these electronic devices can be easily made.

Further, unlike the prior art, the container for accommodating the electronic circuit board can be eliminated, thereby reducing a production cost and enabling the downsizing of the electrical connection box.

Next embodiments according to still a further preferred embodiment of the invention will be described.

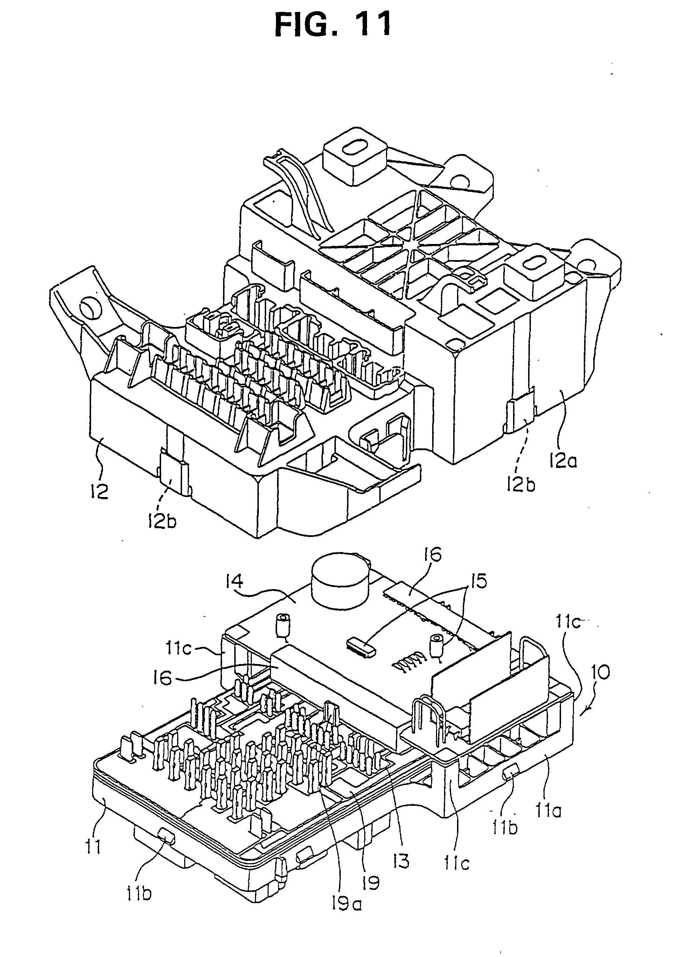

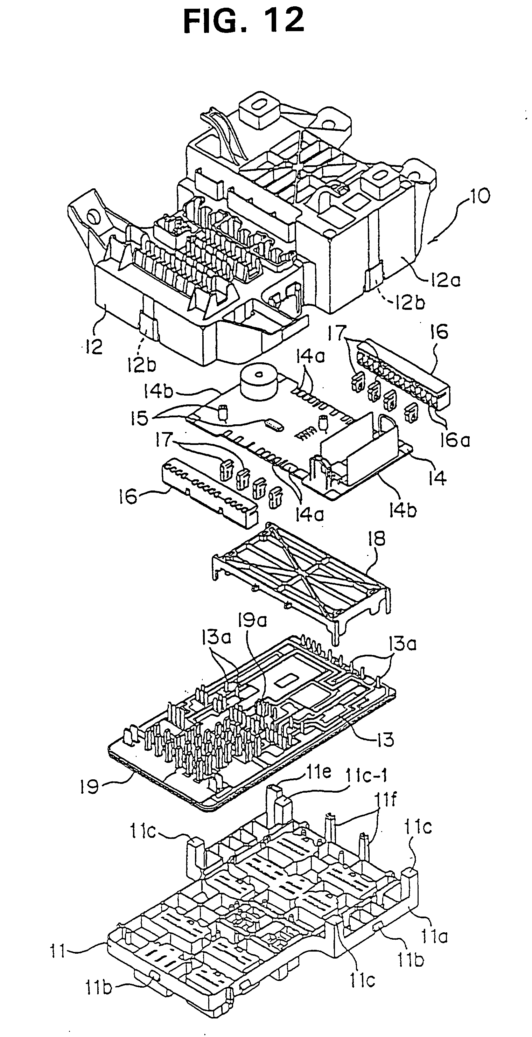

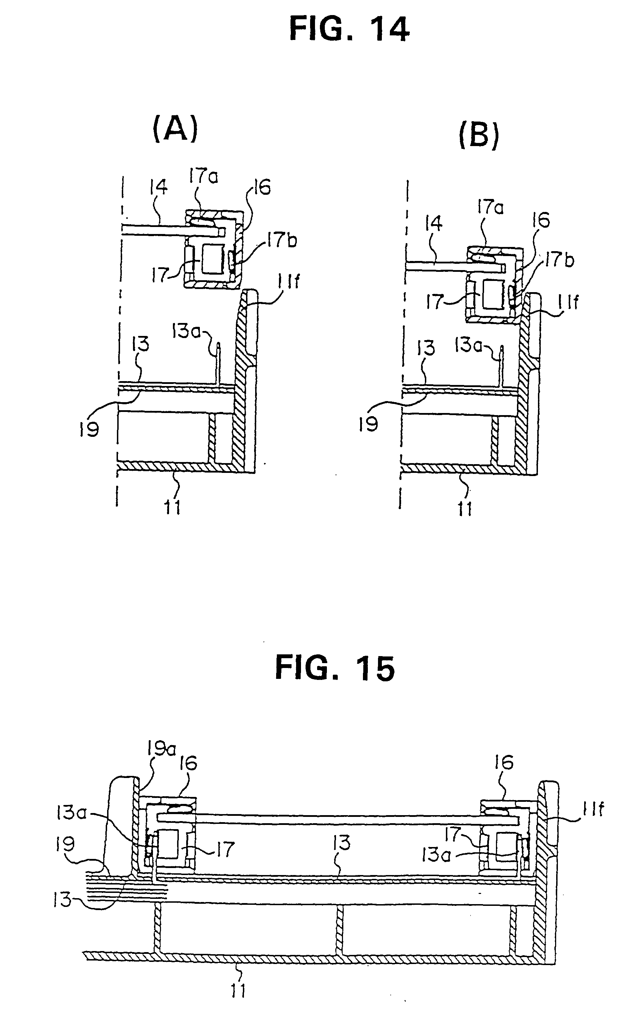

As shown in FIGS. 11 to 16, an electrical connection box 10 includes substantially box-shaped lower and upper casings 11, 12 of synthetic resin. When the upper casing 12 is fitted on the lower casing 11, locking claws 12b formed on outer surfaces 12a of the upper casing 12 are engaged with locking claws 11b formed on outer surfaces 11a of the lower casing 11, with the result that the lower and upper casings 11, 12 are locked.

Busbars 13 having upward projecting tabs 13a are set and positioned on the upper surface of the lower casing 11 from above.

A busbar pressing cover 18 for pressing the busbars 13 against the upper surface of the lower casing 11 may be preferably provided.

A total of four supports 11c project to a level above the busbars 13 in two right corner positions and two intermediate positions of the upper surface of the lower casing 11 with respect to its longitudinal direction. The supports 11c are formed such that their outer surfaces are in flush with the outer surfaces 11a of the lower casing 11.

One 11c-1 of the supports 11c in the right corner positions stands inward of a column 11e standing on the lower casing 11. Outer surfaces of the column 11e are in flush with the outer surfaces 11a of the lower casing 11.

An electronic circuitry containing portion is provided above the supports 11c. The electronic circuit board 14 to be placed in the electronic circuitry containing portion is substantially rectangular-shaped such that its four corners can be placed on the upper faces of the supports 11c of the lower casing 11. At the corner of the circuit board 14 corresponding to the column 11e, a notch (not specifically shown) is formed so as to avoid the column 11e.

The lower casing 11 is also formed with guide ribs 11f for positioning housings 16 (described later) mounted at the opposite sides of the circuit board 14 when the circuit board 14 is set on the upper faces of the supports 11c from above. An insulation plate 19 on which the busbars 13 are placed is also formed with guide ribs 19a for the same purpose.

The guide ribs 11f, 19a are provided in such positions that they come into sliding contact with the outer surfaces of the housing 16 to be mounted at the opposite sides of the circuit board 14, and are adapted to guide and securely position the housings 16 mounted on the opposite sides of the circuit board 14 to be inserted between them.

An upper end portion of each guide rib 11f is thinned by being slantingly cut away so as to facilitate the insertion of the circuit board 14 in particular preassembled with the housings 16 between the guide ribs 11f and 19a.

A variety of electronic devices 15 are mounted on the upper surface of the circuit board 14, and a printed circuit (not specifically shown) for electrically connecting the electronic devices is formed on the lower surface of the circuit board.

Circuit portions 14a continuous with the printed circuit are formed on the opposite sides of the upper surface of the circuit board 14.

The housings 16 detachably mountable on the circuit board 14 is made e.g. of synthetic resin and are substantially in the form of a harmonica. Connection terminals 17 are accommodated in a multitude of terminal chambers 16a arranged side by side in each housing 16. Each connection terminal 17 includes a circuit side electrical connection portion 17a which is fitted to the corresponding circuit portion 14a of the circuit board 14 sideways for the electrical connection and a busbar side electrical connection portion 17b which is fitted to the corresponding tab 13a of the busbar 13 in the lower casing 11 from above for electrical connection. The electrical connection portions 17a, 17b extend in directions at an angle different from 0° or 180°, in particular substantially normal to each other.

The electronic circuit board 14 is preassembled with the respective housings 16 by fitting the circuit side electrical connection portions 17a of the connection terminals 17 accommodated therein to the circuit portions 14a of the circuit board 14.

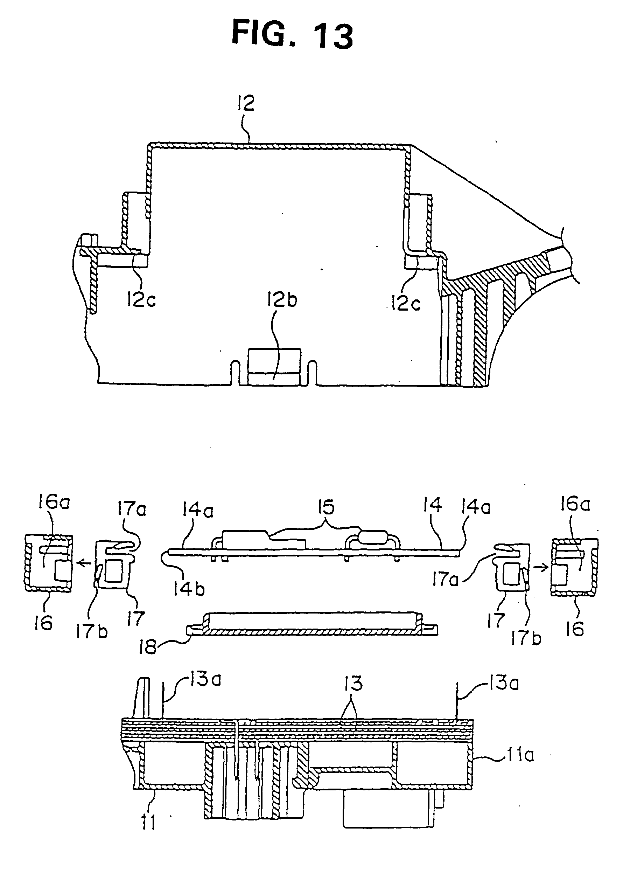

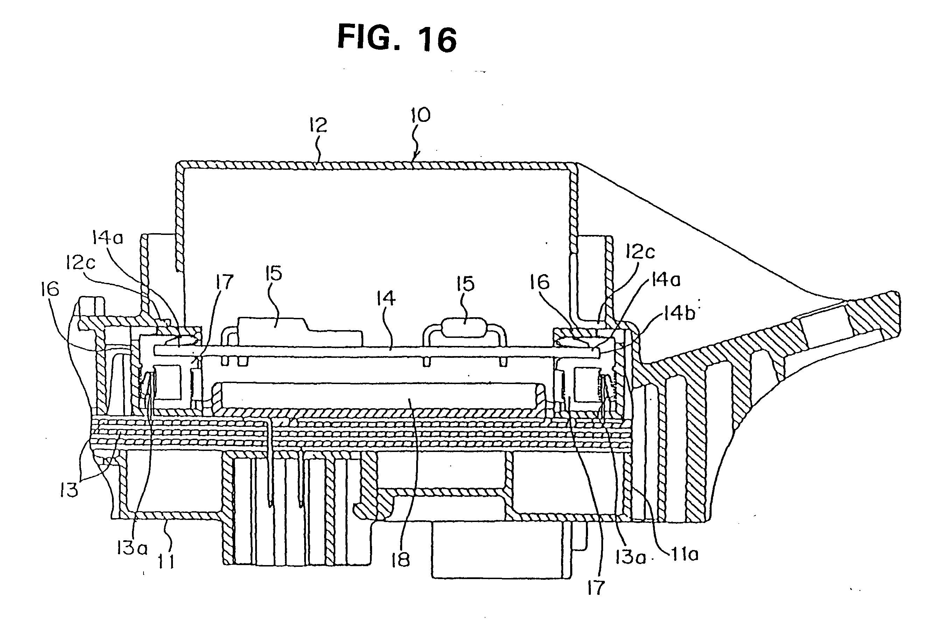

As shown in FIGS. 13 and 16, shoulder portions 12c which come into contact with the upper surfaces of the housings 16 when the upper casing 12 is fitted and locked with the lower casing 11 are formed at upper portions of inner surfaces of the upper casing 12. These shoulder portions 12c press the housings 16 against the upper surfaces of the busbars 13, thereby fixing the four corners of the circuit board 14 between the upper faces of the supports 11c of the lower casing 11 and the shoulder portions 12c.

Before the circuit board 14 is assembled into the electrical connection box 10, the connection terminals 17 are set in the terminal chambers 16a of the respective housings 16, and the electrical connection portions 17a of the connection terminals 17 are fitted to the circuit portions 14a on the opposite sides of the circuit board 14 sideways.

Subsequently, the circuit board 14 preassembled with the housings 16 is set from above while the outer surfaces of the housings 16 are held in sliding contact with the guide ribs 11f, 19a at the opposite sides. The busbar side electrical connection portions 17b of the connection terminals 17 accommodated in the housings 16 are fitted to the corresponding tabs 13a of the busbars 13 placed on the upper surface of the lower casing 11, whereas the circuit board 14 is set on the upper faces of the supports 11c of the lower casing 11.

At this time, since the preassembly of the circuit board 14 and the housings 16 are restrictively guided by the guide ribs 11f, 19a at the substantially opposite sides, the displacement of the circuit board 14 is automatically corrected, with the result that the housings 16 can be automatically located or arranged in their proper or suitable positions. Further, even if the housings 16 are not properly fitted to the circuit board 14, they are pressed inwardly by the guide ribs 11f, 19a at the opposite sides, thereby having their positions automatically corrected. As a result, the connection terminals 17 in the housings 16 can be properly connected with the circuit board 14.

Thus, the connection terminals 17 in the housings 16 can be securely and properly connected with the tabs 13a of the busbars 13.

If the busbars 13 set on the upper surface of the lower casing 11 are pressed by the busbar pressing cover 18 before the circuit board 14 is set on the upper faces of the supports 11c, they can be fixed in advance by being pressed.

When the upper casing 12 is fitted on the lower casing 11 after the circuit board 14 is set as above, thereby pressing the circuit board 14 against the supports 11c of the lower casing 11 via the housings 16 by the shoulder portions 12c, the circuit board 14 is automatically fixed in the lower and upper casings 11, 12. By pressing the housings 16, the electrical connection portions 17a, 17b can be securely connected with the circuit portions 14a of the circuit 14 and the tabs 13a of the busbars 13, respectively.

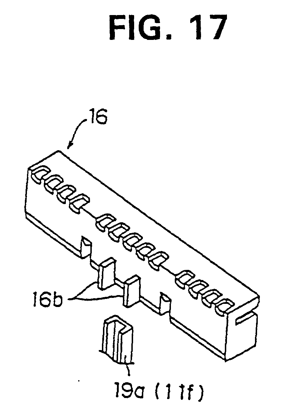

FIG. 17 shows a modification of the housing 16. In this housing 16, a pair of guide projections 16b are formed on the outer wall to face the guide rib 19a or 11f such that they will be located at the opposite sides of the guide rib 19a or 11f. With this housing 16, when assembled into the electrical connection box 10, the circuit board 14 can be easily positioned with respect to the lateral direction by holding the guide rib 19a or 11f by the pair of guide projections 16a. Accordingly, the circuit board 14 can be set in the electrical connection box 10 with an improved operability.

As is clear from the above description, with the electrical connection box according to the fourth aspect of the invention, in particular provided with an electronic circuitry, when being set from above while the connection terminals are fitted to the tabs of the busbars, the housings accommodating the connection terminals and mounted on the electronic circuit board are restrictingly guided by the guide ribs projecting from the lower casing and the insulation plate. Accordingly, the housings can be automatically inserted to and held in the proper positions. Therefore, the connection terminals in the housings can be securely and properly connected with the tabs of the busbars, thereby improving the reliability of the electrical connection.

In addition to the lateral positioning by the guide ribs, the circuit board is positioned with respect to the vertical direction by being tightly held between the supports projecting from the lower casing and the shoulder portions provided at the upper casing. Accordingly, the connection terminals can be held securely connected with the tabs of the busbars and with the circuit portions of the electronic circuit board.

### LIST OF REFERENCE NUMERALS

- 10: Electrical Connection Box
- 11: Lower Casing
- 11c: Support
- 11f: Guide Rib
- 12: Upper Casing
- 12c: Shoulder Portion
- 13: Busbar
- 13a: Tab
- 19a: Guide Rib
- 14: Electronic Circuit Board
- 14a: Circuit Portion
- 14b: Periphery
- 16: Housing
- 17: Connection Terminal
- 17a: Circuit Side Electrical Connection Terminal
- 17b: Busbar Side Electrical Connection Terminal

## Claims

1. An electrical connection box (10), particularly provided with an electronic circuitry, comprising:
casing means (11; 12) having at least a first casing (11) provided with one or more supports (11c) and a second casing (12) provided with at least one shoulder portion (12c),
one or more busbars (13)
an electronic circuit board (14) placed or placeable in proximity of a portion of the casing means (11; 12), in particular of the first casing (11), so as to electrically connect one or more circuit portions (14a) thereof with the busbars (13) via one or more connection terminals (17),
wherein the connection terminals (17) are connected or connectable with the circuit portions (14a), **characterized in that** the electronic circuit board (14) and the terminals (17) form a preassembly, this preassembly being set substantially along a coupling direction (D) of the first and second casing (11, 12) such that the connection terminals (17) are fitted to or connected with the busbars (13), and
the second casing (12) is fitted on the first casing (11) for pressingly fixing the electronic circuit board (14) through the connection terminals (17) by the shoulder portion (12c).

2. An electrical connection box according to claim 1, further comprising a housing (15) in which terminals chambers (16a) for the connection terminals (17) are arranged substantially side by side,
wherein the housing (16) is mounted or mountable on the periphery (14b) of the electronic circuit board (14), in particular substantially sideways, after the connection terminals (17) are accommodated therein, so as to connect the connection terminals (17) with the circuit portions (14a).

3. An electrical connection box according to one or more of the preceding claims, wherein the second casing (12) is, in particular lockingly, fitted on the first casing (11) so as to substantially cover the busbars (13) and the electronic circuit board (14) and/or to pressingly fix the housing (16) mounted or mountable on the electronic circuit board (14) by the shoulder portion (12c).

4. An electrical connection box according to one or more of the preceding claims, wherein the connection terminals each comprise a first electrical connection portion (17a) to be connected with the corresponding circuit portion (14a) and a second electrical connection portion (17b) to be connected with the corresponding busbar (13), in particular a tab (13a) of the busbar (13), the first and second electrical connection portions (17a, 17b) extending in directions at an angle different from 0° or 180°, preferably substantially normal to each other.

5. An electrical connection box according to one or more of the preceding claims, further comprising one or more insulation plates (19), wherein the busbars (13) and the insulation plate (19) are stacked on the casing means (11; 12), in particular on the first casing (11).

6. An electrical connection box (10) according to claim 5, provided particularly with an electronic circuitry, comprising:
guide means (11f; 19a) which project from the casing means (11; 12) and/or the insulation plate (19) and come into contact with the housing (16) so as to position the housing (16).

7. An electrical connection box according to one or more of the preceding claims, wherein the preassembly of the connection terminals (17) connected or connectable with the circuit portions (14a) is set substantially along a coupling direction (D) of the first and second casing (11, 12) such that the connection terminals (17) are fitted to the busbars (13), in particular the tabs (13a) of the busbars (13), and the electronic circuit board (14) is placed on the supports (11c) projecting from the first casing (11).

8. An electrical connection box according to one or more of the preceding claims, wherein outer surfaces of the supports (11c) projecting from the first casing (11) are substantially in flush with outer surfaces (11a) of the first casing (11) and in particular the periphery (14b) of the electronic circuit board (14) is substantially in flush with the outer surfaces (11a) of the support (11c) and of the first casing (11).

9. An electrical connection box according to one or more of the preceding claims, wherein the second casing (12) cannot be fitted on the first casing (11) when the electronic circuit board (14) is displaced.

## Patentansprüche

1. Ein elektrischer Verbindungs- bzw. Anschlusskasten (10), insbesondere mit einer elektronischen Schaltung versehen, umfassend:
eine Gehäuseeinrichtung (11; 12), aufweisend mindestens ein erstes Gehäuse (11), das mit einem oder mehreren Trägern (11c) versehen ist, und ein zweites Gehäuse (12), das mit mindestens einem Schulterabschnitt (12c) versehen ist,
eine oder mehrere Strom- bzw. Sammelschienen (13),
eine elektronische Leiter- bzw. Schaltplatte (14), die in der Nähe eines Abschnitts der Gehäuseeinrichtung (11; 12), insbesondere des ersten Gehäuses (11), platziert ist oder platziert werden kann, um einen oder mehrere Schaltabschnitte (14a) davon mit den Sammelschienen (13) über eine oder mehrere Verbindungsbzw. Anschlussklemmen bzw. -terminal (17) elektrisch zu verbinden,
wobei die Anschlussklemmen (17) mit den Schaltabschnitten (14a) verbunden sind oder verbunden werden können, **dadurch gekennzeichnet, dass**
die elektronische Schaltplatte (14) und die Klemmen (17) eine Vormontage bilden, wobei diese Vormontage im Wesentlichen entlang einer Kupplungsrichtung (D) des ersten und zweiten Gehäuses (11, 12) gesetzt wird, so dass die Anschlussklemmen (17) an den Sammelschienen (13) angebracht oder mit diesen verbunden werden, und
das zweite Gehäuse (12) an das erste Gehäuse (11) zum pressenden Befestigen der elektronischen Schaltplatte (14) durch die Anschlussklemmen (17) mittels des Schulterabschnitts (12c) angebracht ist.

2. Ein elektrischer Anschlusskasten nach Anspruch 1, des Weiteren umfassend ein Gehäuse bzw. Unterbringung (16), in dem Anschlusskammern (16a) für die Anschlussklemmen (17) im Wesentlichen nebeneinander angeordnet sind,
wobei das Gehäuse (16) an der Peripherie (14b) der elektronischen Schaltplatte (14), insbesondere im Wesentlichen seitwärts, angebracht ist oder angebracht werden kann, nachdem die Anschlussklemmen (17) darin untergebracht wurden, um die Anschlussklemmen (17) mit den Schaltabschnitten (14a) zu verbinden.

3. Ein elektrischer Anschlusskasten nach einem oder mehreren der vorhergehenden Ansprüche, wobei das zweite Gehäuse (12) insbesondere verriegelnd bzw. verrastend an dem ersten Gehäuse (11) angepaßt ist, um im Wesentlichen die Sammelschienen (13) und die elektronische Schaltplatte (14) abzudecken und/oder um das Gehäuse (16), das an der elektronischen Schaltplatte (14) angebracht ist oder werden kann, mittels des Schulterabschnitts (12c) pressend zu befestigen.

4. Ein elektrischer Anschlusskasten gemäß einem oder mehreren der vorhergehenden Ansprüche, wobei die Anschlussklemmen jeweils einen ersten elektrischen Verbindungsabschnitt (17a), der mit dem entsprechenden Schaltabschnitt (14a) zu verbinden ist, und einen zweiten elektrischen Verbindungsabschnitt (17b), der mit der entsprechenden Sammelschiene (13), insbesondere einer Lasche (13a) der Sammelschiene (13), zu verbinden ist, umfassen, wobei sich der erste und der zweite elektrische Verbindungsabschnitt (17a, 17b) in Richtungen in einem Winkel, der nicht 0° oder 180° beträgt, vorzugsweise im Wesentlichen normal zueinander, erstrecken.

5. Ein elektrischer Anschlusskasten nach einem oder mehreren der vorhergehenden Ansprüche, des Weiteren aufweisend eine oder mehrere Isolierplatten (19), wobei die Sammelschienen (13) und die Isolierplatten (19) an der Gehäuseeinrichtung (11; 12), insbesondere an dem ersten Gehäuse (11), aufgeschichtet bzw. gestapelt sind.

6. Ein elektrischer Anschlusskasten (10) nach Anspruch 5, insbesondere mit einer elektronischen Schaltung versehen, umfassend:
Führungsmittel (11f; 19a), die von der Gehäuseeinrichtung (11; 12) und/oder der Isolierplatte (19) vorstehen und mit dem Gehäuse (16) in Berührung kommen, um das Gehäuse (16) zu positionieren.

7. Ein elektrischer Anschlusskasten nach einem oder mehreren der vorhergehenden Ansprüche, wobei die Vormontage der Anschlussklemmen (17), die mit den Schaltabschnitten (14a) verbunden sind oder werden können, im Wesentlichen entlang einer Kupplungsrichtung (D) der ersten und zweiten Gehäuse (11, 12) gesetzt wird, so dass die Anschlussklemmen (17) an den Sammelschienen (13), insbesondere den Laschen (13a) der Sammelschienen (13), angebracht bzw. gepaßt werden und die elektronische Schaltplatte (14) auf bzw. an die Träger (11c), die von dem ersten Gehäuse (11) vorstehen, angeordnet wird.

8. Ein elektrischer Anschlusskasten nach einem oder mehreren der vorhergehenden Ansprüche, wobei Außenflächen der Träger (11c), die von dem ersten Gehäuse (11) vorstehen, im Wesentlichen mit Außenflächen (11a) des ersten Gehäuses (11) fluchten und insbesondere die Peripherie (14b) der elektronischen Schaltplatte (14) im Wesentlichen mit den Außenflächen (11a) des Trägers (11c) und des ersten Gehäuses (11) fluchtet.

9. Ein elektrischer Anschlusskasten nach einem oder mehreren der vorhergehenden Ansprüche, wobei das zweite Gehäuse (12) nicht an das erste Gehäuse (11) gepaßt werden kann, wenn die elektronische Schaltplatte (14) verschoben ist.

## Revendications

1. Boîtier de connexion électrique (10) comportant, en particulier, des circuits électroniques, comprenant:
un moyen formant carter (11 ; 12) présentant au moins un premier carter (11) comportant un ou plusieurs supports (11c) et un second carter (12) comportant au moins une partie formant épaulement (12c),
une ou plusieurs barres collectrices (13),
un circuit imprimé électronique (14) placé ou pouvant être placé à proximité d'une partie du moyen formant carter (11 ; 12), en particulier du premier carter (11), de manière à raccorder électriquement une ou plusieurs parties de circuit (14a) de ce dernier sur les barres collectrices (13) par l'intermédiaire d'une ou plusieurs bornes de liaison (17),
dans lequel les bornes de liaison (17) sont raccordées ou peuvent être raccordées aux parties de circuit (14a), **caractérisé en ce que** le circuit imprimé électronique (14) et les bornes (17) forment un sous-ensemble, ce sous-ensemble étant placé sensiblement suivant une direction de couplage (D) des premier et second carters (11, 12) de telle sorte que les bornes de liaison (17) sont assemblées sur les barres collectrices (13) ou raccordées à celles-ci, et
le second carter (12) est assemblé sur le premier carter (11) afin de fixer par emmanchement le circuit imprimé électronique (14) à travers les bornes de liaison (17) par la partie en épaulement (12c).

2. Boîtier de connexion électrique selon la revendication 1, comprenant, en outre, un logement (16) dans lequel des chambres de bornes (16a) pour les bornes de liaison (17) sont agencées sensiblement côte à côte,
dans lequel le logement (16) est monté ou peut être monté sur la périphérie (14b) du circuit imprimé électronique (14), en particulier, de manière sensiblement latérale, après que les bornes de liaison (17) ont été reçues dans ce dernier, de manière à raccorder les bornes de liaison (17) aux parties de circuit (14a).

3. Boîtier de connexion électrique selon une ou plusieurs des revendications précédentes, dans lequel le second carter (12) est assemblé, en particulier de manière verrouillée, sur le premier carter (11) afin de recouvrir sensiblement les barres collectrices (13) et le circuit imprimé électronique (14) et/ou fixer par emmanchement le logement (16) monté ou pouvant être monté sur le circuit imprimé électronique (14) par la partie en épaulement (12c).

4. Boîtier de connexion électrique selon une ou plusieurs des revendications précédentes, dans lequel les bornes de liaison comprennent chacune une première partie de liaison électrique (17a) à raccorder sur la partie de circuit correspondante (14a) et une seconde partie de liaison électrique (17b) à raccorder sur la barre collectrice correspondante (13), en particulier, une patte (13a) de la barre collectrice (13), la première et la seconde parties de liaison électrique (17a, 17b) s'étendant suivant des directions formant des angles différents de 0 ou 180°, de préférence sensiblement perpendiculaires l'une à l'autre.

5. Boîtier de connexion électrique selon une ou plusieurs des revendications précédentes, comprenant, en outre, une ou plusieurs plaques isolantes (19) dans lequel les barres collectrices (13) et la plaque isolante (19) sont empilées sur les moyens formant carter (11 ; 12), en particulier, sur le premier carter (11).

6. Boîtier de connexion électrique (10) selon la revendication 5, comportant, en particulier, un circuit électronique, comprenant:
un moyen de guidage (11f; 19a) qui est en saillie par rapport aux moyens formant carter (11 ; 12) et/ou à la plaque d'isolation (19) et vient en contact avec le logement (16) de manière à positionner le logement (16).

7. Boîtier de connexion électrique selon une ou plusieurs des revendications précédentes, dans lequel le sous-ensemble des bornes de liaison (17) raccordées ou pouvant être raccordées aux parties de circuit (14a) est placé sensiblement le long d'une direction de couplage (D) des premier et second carters (11, 12) de telle sorte que les bornes de liaison (17) sont assemblées sur les barres collectrices (13), en particulier, les pattes (13a) des barres collectrices (13), et le circuit imprimé électronique (14) est placé sur les supports (11c) en saillie par rapport au premier carter (11).

8. Boîtier de connexion électrique selon une ou plusieurs des revendications précédentes, dans lequel des surfaces externes des supports (11c) en saillie par rapport au premier carter (11) sont sensiblement à fleur des surfaces externes (11a) du premier carter (11) et, en particulier, la périphérie (14b) du circuit imprimé électronique (14) est sensiblement à fleur des surfaces externes (11a) du support (11c) et du premier carter (11).

9. Boîtier de connexion électrique selon une ou plusieurs des revendications précédentes, dans lequel le second carter (12) ne peut pas être assemblé sur le premier carter (11) lorsque le circuit imprimé électronique (14) est déplacé.
